# EUROPÄISCHE PATENTSCHRIFT

(11) **EP 0 547 524 B1**
(45) Veröffentlichungstag und Bekanntmachung des Hinweises auf die Patenterteilung: **06.08.1997**
(21) Anmeldenummer: 92121160.3
(22) Anmeldetag: 11.12.1992
(51) Int. Cl.: B32B 31/00, B29C 35/00, B30B 15/34, B30B 15/06

(54) **Verfahren und Vorrichtung zum Kaschieren von Schichten von Identifikationskarten u. dgl.**
Method and apparatus for laminating identity cards and the like
Procédé et dispositif pour le laminage de cartes d'identification et analogues

(30) Priorität: 19.12.1991 DE 4141972
(43) Veröffentlichungstag der Anmeldung: 23.06.1993
(73) Patentinhaber: INTERLOCK AG, CH-8952 Schlieren (CH)
(72) Erfinder: Vogt, Werner, CH-5453 Remetschwil (CH)
(74) Vertreter: Otte, Peter, Dipl.-Ing.

(56) Entgegenhaltungen:
- EP-A- 0 499 513
- WO-A-87/01651
- DE-A- 1 810 986
- US-A- 2 532 501
- US-A- 2 874 751
- US-A- 4 550 057
- PATENT ABSTRACTS OF JAPAN vol. 6, no. 236 (M-173)(1114) 25. November 1982

## Beschreibung

### Stand der Technik

Die Erfindung geht aus von einem Verfahren zum Kaschieren von Schichten aus mindestens zum Teil thermoplastischen Folien nach dem Oberbegriff des Anspruchs 1 und einer Vorrichtung zur Durchführung dieses Verfahrens nach dem Oberbegriff des Anspruchs 6.

Bei einem bekannten Verfahren zum Kaschieren von Schichten und einer entsprechenden Preßvorrichtung mit zwei Platten zur Durchführung des Verfahrens (europäische Patent EP-A-0 013 557) werden die Schichten zu einem Verbund durch Wärme- und Druckeinwirkung gepreßt, wobei auf jeder Seite des von den Schichten gebildeten in die Preßvorrichtung eingelegten Rohlings zunächst von zwei beheizten platten, also beidseitig eine Wärme- und Druckeinwirkung ausgeübt wird und anschließend die Heizwirkung abgeschaltet wird, so daß nach Abkühlung eine solchermaßen hergestellte Identifika-tionskarte aus der Preßvorrichtung entnommen werden kann.

Neben der Anordnung von Widerstandsdrähten in beidseitigen Preßplatten größerer Abmessung, die unmittelbar mit den zu kaschierenden Schichten in Wirkverbindung treten und die über zwischengefügte Isolierschichten gegen eigentliche Stützplatten der Preßvorrichtung, an denen sie befestigt sind, abgeschirmt sind, ist es aus dieser Veröffentlichung auch bekannt, die Preßplatten als gekühlte Stützplatten auszubilden und diesen als Heizelement eine flächenhafte Heizwiderstandsschicht vorzuschalten, wobei die Heizwiderstandsschicht den zu kaschierenden Schichten unmittelbar zugewandt ist und gegen die gekühlten Stützplatten durch eine Isolierschicht thermisch abgeschirmt wird. An die Heizwiderstandsschicht werden impulsförmige Spannungen von einer Heizspannungsquelle angelegt, wobei ferner noch eine Besonderheit bei dieser bekannten Kaschiervorrichtung zu erwähnen ist, die darin besteht, daß speziell wärmeempfindliche Sicherungsmerkmale in die hergestellten Scheck-, Ausweis- oder Paßkarten Guilloche-Drucke oder Wasserzeichen, Mikrofilmbilder, Hologramme u. dgl. dadurch eingebracht werden können, daß ausschließlich im Bereich dieser zusätzlichen druck- und temperaturempfindlichen Sicherungsmerkmale Zurückversetzte Stempel angeordnet sind, dessen Temperatur niedriger als die Temperatur der die Kaschierwirkung sicherstellenden Platten ist. Daher ist im Bereich der Stempelöffnungen der Druck geringer als der Kaschierdruck, desgleichen ist die Temperatur niedriger als die Temperatur der Platte.

Die Problematik bei sämtlichen bisher bekannten Kaschiervorrichtungen besteht darin, daß der Herstellungszyklus in zwei gut unterscheidbare Teilzyklen zerfällt, nämlich das anfängliche, möglichst sprunghafte Einbringen von Wärme, damit die Kaschiertemperatur der miteinander zu verbindenden Schichten der Identifikationskarte, wie sie im folgenden lediglich noch genannt wird, erreicht wird, und ein anschließender Abkühlzyklus, der durch Abschalten der Heizelemente eingeleitet wird, bei dem es sich aber verbietet, die Preßvorrichtung schon zu öffnen und den verschweißten Kartenrohling zu entnehmen, da dieser noch zu wenig mechanische Stabilität aufweist.

Es ist daher wünschenswert, auf den in der Preßvorrichtung befindlichen Rohling bzw. anfänglich auf den eingelegten Schichtverbund zunächst eine Erwärmungs- und anschließend eine Abkühlphase zur Einwirkung zu bringen, wobei die sich zwischen der flächenhaften Folienheizschicht und der zumeist ausdrücklich noch gekühlten Preßplatte befindliche Isolierschicht zwei gegensätzliche Aufgaben zu erfüllen hat, denen sie gleichermaßen schlecht gerecht wird, nämlich in der Erwärmungsphase die von dem Heizelement ausgestrahlte oder aufgebrachte Wärmemenge möglichst vollständig von den angrenzenden Kühlplatten fernzuhalten und auf die zu kaschierenden Schichten aufzuleiten und andererseits während der Abkühlphase nach dem Abschalten der Heizung den vorher unterdrückten Wärmeabfluß möglichst schnell und umfassend zu ermöglichen, und zwar genau in der Richtung zu den gekühlten Stützplatten, in welcher in der vorherigen Heizphase ein Wärmeabfluß sozusagen verboten war.

Wird daher diese "Isolierschicht" im hohen Maße thermisch isolierend ausgelegt, so erzielt man eine gute Wärmeeinwirkung und eine nicht zufriedenstellende Rückkühlwirkung, während bei einem gut wärmeleitenden Material der "Isolierschicht" bei guter Rückkühlung die anfängliche Wärmeisolierung leidet.

Diese Problematik ist auch in der aus der europäischen Patentschrift 0 154 970 bekannten Kaschiervorrichtung zur Herstellung von Identifikationskarten erkannt worden, wo darauf hingewiesen wird, daß bisher solche Kaschiervorrichtungen aus einem unmittelbar an einen Kühlrippen aufweisenden Metallblock angrenzenden, von Glasfasermatten gebildeten Heizelement bestehen, zwischen denen Widerstandsleiterbahnen angeordnet sind. Daher fließt die anfänglich erzeugte Wärme zu einem erheblichen Teil in den Metallblock, der dadurch mit aufgeheizt wird, und eine Kühlung kann erst nach Verschweißung des Kartenrohlings erfolgen, weil sonst während des Verschweißens die erforderliche Verschweißtemperatur nicht erreicht wird. Erst nach dem Verschweißen muß dann die aufgeheizte Masse des Metallblocks rückgekühlt werden. Hieraus wird erkennbar, daß bei den bisherigen Kühlvorrichtungen die verschiedenen Funktionen der erwähnten Zyklen so nicht einwandfrei ablaufen und versucht wird, durch eine entsprechend gezielt bemessene Zeitsteuerung die stets auftretenden Nachteile in einen beherrschbaren Rahmen zu verlagern. Dennoch ist nicht zu verhindern, daß mit einem vergleichsweisen langen Gesamtzyklus (Erwärmung und nachfolgende Abkühlung) gerechnet werden muß, der praxisgerecht stets zwischen einer halben und mehreren Minuten liegt, bei dennoch erheblichen Wärmeverlusten. In dieser EU-A-0 154 970 ist allerdings von wenigen Sekunden die Rede.

Bei einer weiteren bekannten Einrichtung (US-A-4 108 713), die ebenfalls zur Laminierung von Identifikationskarten geeignet ist, wird das üblicherweise für einen Kaschiervorgang verwendete flächenartige Heizelement genauer erläutert und besteht aus einer Trägerplatte geringer Masse und entsprechend geringer Wärmekapazität, so daß sowohl der Heizvorgang als auch der sich anschließende Abkühlvorgang sehr schnell realisiert werden können, wobei die metallische Trägerplatte eine Dicke von weniger als 0,25 mm aufweist und zwischen dem eigentlichen Flächenheizelement und der Trägerplatte eine elektrische Isolierschicht aus Silikongummi angeordnet ist. Das flächenartige Heizelement umfaßt mäanderförmig verlaufende flache Widerstandsdrähte, zu denen angrenzend ferner ein Wärmesensor angeordnet ist zur Temperatursteuerung.

Ferner ist es in einem anderen gattungsfremden Zusammenhang, nämlich zur Herstellung von dünnen, thermoplastischen Kunstharzfolien bekannt (US-A-4 752 204 bzw. die auf die gleiche japanische Ursprungspriorität und sich daher auf den gleichen Gegenstand beziehende US-A-4 550 057), einen aus einem entsprechenden Kunstharz bestehenden einstückigen Harzblockrohling zwischen einem Paar anfänglich aufgeheizter Preßplatten zu erhitzen und gleichzeitig durch den ausgeübten Preßdruck in seinen Dimensionen erheblich zu verformen, nämlich zu einer Folie breitzudrücken.

Zu diesem Zweck besteht ein entsprechendes Preßwerkzeug aus zwei aufeinandergerichten Preßbacken, in denen jeweils beidseitig durch Federwirkung im Abstand zu angrenzenden Kühlblöcken gehaltene Preßflächen angeordnet sind, die den einzulegenden Kunstharzblock zwischen sich aufnehmen.

Da erkannt worden ist, daß man nicht gleichzeitig Kühlen und Heizen kann, wird zunächst bei zu den Kühlblöcken im Abstand gehaltenen Preßflächen zwischen diese von einer anderen Stelle ein Heizelement eingebracht, welches die Preßflächen beidseitig erwärmt. Sobald ein hinreichender Erwärmungszustand erreicht worden ist, wobei die eingebrachte Wärmemenge durch den zunächst noch eingehaltenen Abstand zu den angrenzenden Kühlblöcken an einem Abfließen gehindert wird, wird das Heizelement wieder entnommen und der zu verformende Kunstharzblock eingelegt. Anschließend fahren dann die Preßstempel aufeinander zu, wodurch die beheizten Druckflächen gleichzeitig bei Zurückweichen entsprechender Vorspannungsfedern sowohl in thermischen Kontakt gegen die Kühlblöcke als auch gegen den eingelegten Kunstharzblock gepreßt werden, so daß bei diesem Verformungsschritt, und hierauf kommt es allein entscheidend an, die in einem früheren Arbeitsschritt eingebrachte Wärme sowohl (als kontinuierlich abnehmende Restwärme) auf den Rohling übertragen als auch gleichzeitig über die Kühlblöcke abgeführt, also der Verformungsarbeit entzogen wird. Ein solches Verfahren mag für die Folienherstellung aus thermoplastischem Kunstharz geeignet sein, ist jedoch für die Herstellung eines Laminatverbunds (Kaschieren) für Identifikationskarten und dergleichen allein schon deshalb unbrauchbar, weil an der eingangs erwähnten eigentlichen Problematik der gleichzeitigen Wärmezuführung und -abführung im Moment der Bearbeitung, also der Wärme- und Druckausübung auf den Rohling, nichts geändert wird, sondern im Gegenteil sogar insofern noch eine Verschlechterung eingeführt wird, als bei der durch thermischen Kontakt realisierbaren Preß- und Formarbeit überhaupt keine Wärme mehr zugeführt, sondern durch gleichzeitiges Kühlen sogar - bei entnommenem Heizelement - nur noch gleichzeitig abgeführt wird, zu einem Zeitpunkt also, wo Wärmeenergie am dringendsten benötigt wird.

In ähnlicher Weise wird bei einem ebenfalls gattungsfremden, bekannten Verfahren zur Herstellung von Sandwichpaneelen unter Verwendung von Halbzeugen aus Hochleistungsverbundwerkstoffen mit polymeren Matrizes gearbeitet (DE-OS 39 10 021). Solche Sandwichelemente umfassen einen innenliegenden Wabenwerkstoff beispielsweise aus Aluminium, Kunststoff oder imprägniertem Papier auf, auf welchen Decklaminate in Form von Polymeren aufgebracht werden. Zu diesem Zweck wird das zugeschnittene Halbzeug aus polymeren Decklagen und dem Kernmaterial zwischen zwei Blechen druckfrei durch eine Widerstandsheizung zunächst erwärmt, wobei auf beidseitige Heizbleche zunächst über Druckfedern und Isolatoren nur ein so hinreichender Druck ausgeübt wird, daß sich ein hinreichend guter Wärmeübergang von den Heizblechen zum Halbzeug ergibt.

Erst nach Erreichen der Verarbeitungstemperatur fahren äußere gekühlte Preßplatten auf die beidseitigen Heizbleche und das zwischen diese eingelegte und in der Zwischenzeit erwärmte Halbzeug zu, verpressen in dieser Phase das Kernmaterial und verbinden dieses mit den erwärmten Deckschichten bei gleichzeitiger Wärmeabfuhr von den Heizblechen zu den gekühlten Werkzeugplatten. Dabei ist davon auszugehen, daß bei der praktischen Realisierung die Kühlwirkung notwendigerweise schon vor dem Aufbringen des erforderlichen Preßdrucks für den Verformvorgang einsetzt, da der Preßdruck erst dann aufgebracht werden kann, wenn die gekühlten Preßplatten vollständig an den extrem dünnen Heizblechen zur Anlage gelangt sind, so daß auch bei diesem bekannten Verfahren mindestens gleichzeitig gekühlt und verformt wird.

Die Erfindung hat sich das Ziel gesetzt, hier Abhilfe zu schaffen und bei der Herstellung von Identifikationsausweisen, Kreditkarten u.dgl. die sich im Grunde widersprechenden Forderungen zur Gewährleistung einer gleichzeitigen guten Wärmeisolierung (während des Heizvorgangs) und einer sich daran anschließenden schnellen und einwandfreien, unbehinderten Kühlung des Kaschiererzeugnisses sozusagen unter einen Hut zu bringen und zu erfüllen.

### Vorteile der Erfindung

Die Erfindung erreicht dieses Ziel mit den Merkmalen des Anspruchs 1 bzw. des Unteranspruchs 8 und hat den Vorteil, daß der Kaschiervorgang physikalisch deutlich in eine Heizphase und eine sich daran anschließenden Abkühlphase aufgeteilt wird, ohne daß sich hierbei zeitliche Überschneidungen und dadurch ein auch die Qualität der herzustellenden Erzeugnisse beeinträchtigendes Mischverhalten ergibt.

Der Erfindung gelingt es daher, den gesamten Kaschiervorgang einerseits schnell durchzuführen bei hierdurch erzielter besonders hoher Qualität des erzeugten Produkts, also aus einzelnen Laminatschichten bestehenden Identifikationskarten, Kreditkarten, Ausweisen u.dgl., wobei durch präzise, hochwirksame und zueinander im zeitlichen Ablauf getrennte Teilverarbeitungsschritte (Erwärmung - Kühlung) das thermoplastische Materialverhalten der Laminatschichten begünstigt wird.

Die Effizienz der Heizung erhöht sich entscheidend, da praktisch keine Wärmeverluste mehr auftreten, so daß der Plastifizierungs- und Verschmelzungsvorgang mit einem steilen Temperaturanstieg beginnt und nach kurzer Einwirkungsdauer beendet ist, wobei in gleicher Weise die Kühlwirkung dadurch entscheidend verbessert wird, daß nunmehr, aufgrund einer erzielten Ventilwirkung der am Kaschiervorgang beteiligten Komponenten der Abfluß der am Ende des Erwärmungs-Teilzyklus vorhandenen Wärmemenge vollkommen behinderungsfrei vor sich geht, wobei ferner gleichzeitig auch noch eine zusätzliche gesteuerte Kühlwirkung möglich ist.

Die Erfindung hat den Vorteil, daß bei nur geringfügig größerem mechanischem Aufwand bei der Realisierung mindestens eines der Preßstempel sowohl eine hervorragende Isolierung während des Heizteilzyklus erreicht wird, was eine schnelle Aufheizung und eine kurze Dauer bis zur Erreichung der Plastifizierungstemperatur bedeutet, als auch eine sich daran anschließende besonders gute Wärmeabfuhr durch direkte körperliche, bevorzugt metallisch sehr gut wärmeleitende Verbindung des unmittelbaren Preßbereichs für die zu kaschierenden Laminatschichten mit Kühlkörpern. Die Erfindung ermöglicht diese unterschiedliche Behandlung innerhalb der gleichen Preß- und Plastifizierungszone - unterschiedlich mit Bezug auf die in dieser jeweils ablaufenden Heizteil- und Abkühlungszyklen - dadurch, daß eine Relativbewegung der Komponenten zueinander zugelassen wird, ohne daß hierdurch die auch bei konventionellen Kaschiergeräten ohnehin vorgesehenen druckerzeugenden Mechanismen einer wesentlichen Änderung bedürfen.

Dadurch wird die Preß- und Plastifizierungszone je nach Arbeitszyklus (Heizen - Kühlen) unterschiedlich gestellt, was bezüglich der Wärme- und Kühlwirkungen, die auf die Preßzone und auf die darain befindlichen Laminatschichten ausgeübt werden, bedeutet, daß zugeführte Wärme durch besonders wirksame thermische Isolierung nicht abfließen kann während des Heizteilzyklus, während im Gegensatz dazu während des Kühlteilzyklus Wärme aus der Preßzone geradezu abgesaugt wird.

Durch die in den Unteransprüchen aufgeführten Maßnahmen sind vorteilhafte Weiterbildungen und Verbesserungen der Erfindung möglich. Vorteilhaft ist die Durchführung einer Relativbewegung von Preßstempel-Komponenten lediglich in einem der Preßstempel, während der dann andere Preßstempel ausschließlich Heizungszwecken dient und in keinem der Teilzyklen einer Wärmeabfuhr oder Kühlung unterworfen wird, im Gegenteil durch die Zuordnung thermischer Isolatoren lediglich insofern eine Schwankung seiner Wärmeabgabe erfährt, weil während des Abkühlzyklus die Heizung abgeschaltet wird.

Eine weitere vorteilhafte Ausgestaltung besteht noch darin, daß die im Kühlteilzyklus markant aktivierte Kühlwirkung weiter verstärkt und verbessert wird durch die Zuordnung eines gezielt eine Kältewirkung erzeugenden Elements, bevorzugt eines Peltier-Elements von flächenhafter Ausdehnung. Hierdurch läßt sich die Kühlwirkung besonders gut unterstützen.

Eine weitere vorteilhafte Variante der Erfindung besteht schließlich darin, mindestens einige der Relativbewegungen der Komponenten zueinander durch pneumatische Einflußnahme zu realisieren.

So ist es vorteilhaft, den Stempelinnenbereich, also den Bereich, der sich zwischen den beiden Preßplatten befindet und in welchem auch der zu kaschierende Rohling aufgenommen ist, gegenüber der Umgebung abzudichten und unter Vakuumeinfluß zu setzen. Hierdurch ergeben sich entsprechend starke Kräfte, die während der Heizphase vollständig ausreichend sind, um den erforderlichen Preßdruck für den Kaschiervorgang auszuüben. Diese Vakuumbeaufschlagung hat zusätzlich noch den entscheidenden Vorteil, daß beim Rohling Fehler oder dem Aussehen abträgliche Erscheinung, beispielsweise Einschlüsse von Luftblasen u.dgl., sicher vermieden und insbesondere Hochglanzkaschierungen ein besonders einwandfreies Aussehen bei exzellenter Qualität erzielen.

Auch der sich an die Heizphase anschließende weitere Bewegungsablauf, in welchem(auch beidseitig) Kühlblöcke an den geheizten Preßplattenverbund herangefahren werden, kann durch Ausnutzung des vorhandenen Vakuums realisiert werden, indem das Vakuum auch auf den Kühlblockbereich (bei entsprechender peripherer Abdichtung) ausgedehnt wird, so daß die Kühlblöcke an den jeweiligen Preßplattenverbund herangefahren werden.

Falls gewünscht, kann hier auch noch mit zusätzlicher Druckluftunterstützung gearbeitet werden.

### Zeichnung

Ausführungsbeispiele der Erfindung sind in der Zeichnung dargestellt und werden in der nachfolgenden Beschreibung näher erläutert. Es zeigen:
- Fig. 1: in schematisiertem Querschnitt eine mögliche Ausführungsform von oberem und unterem Stempel eines Kaschierungszwecken dienenden Preßwerkzeugs;
- Fig. 2: zeigt zum besseren Verständnis in perspektivischer Darstellung lediglich einen bevorzugten Aufbau eines der Stempel, beispielsweise des unterem Stempels;
- Fig. 3: stellt, ebenfalls in perspektivischer Darstellung einen Ausschnitt des unteren Stempels dar zum besseren Verständnis der Kühlkörperausbildung mit gefederten Stützstegen;
- Fig. 4: zeigt eine Variante der Kühlkörperausbildung für vorzugsweise den unteren Stempel mit einem zusätzlichen Kühlelement, und
- Fig. 5: zeigt ein mögliches Ausführungsbeispiel einer oberen Stempelausbildung, ebenfalls in perspektivischer Form.

### Beschreibung der Ausführungsbeispiele

Der Grundgedanke besteht darin, die bei Kaschiervorgängen stets kritische Abkühlungsphase dadurch entscheidend zu verbessern und zu verkürzen, indem während der vorhergehenden Heizphase noch nicht vorhandene Bedingungen im Preßstempelbereich realisiert werden, was sich so auswirkt, daß die während des Heizteilzyklus erzeugte Wärmeenergie praktisch allseitig von thermischen Isolatoren begrenzt und auf die zu kaschierenden Laminatschichten gerichtet wird, so daß sich ein besonders guter Wirkungsgrad ergibt, während in dem sich daran anschließenden Kühlteilzyklus eine optimierte Wärmeabfuhr möglich ist, indem Teilkomponenten mindestens in einem der Preßstempel einen mechanischen Bewegungsablauf durchführen und hierdurch ein direktes Heranfahren von Kühlflächen in den Bereich der erhitzten Preßzone möglich ist, speziell eine Anlage eines Kühlkörpers durch Überbrückung eines bisher vorhandenen, isolierenden Zwischenraums rückseitig an den zu kaschierenden Laminatschichten zugewandten Stempelkomponenten.

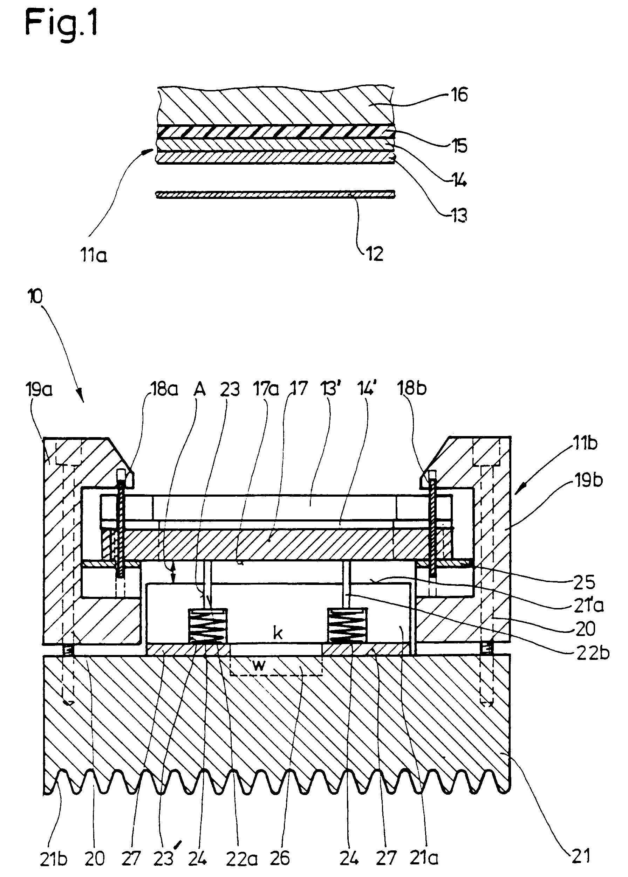

In den Figuren 1-5 ist das Preßwerkzeug mit 10; ein oberer Stempel mit 11a und ein unterer Stempel mit 11b bezeichnet.

Der Aufbau des oberen Stempels ist vergleichsweise einfach realisiert, obwohl es sich versteht, daß auch der obere Stempel so ausgebildet sein kann, wie weiter unten mit Bezug auf den unteren Stempel 11b erläutert.

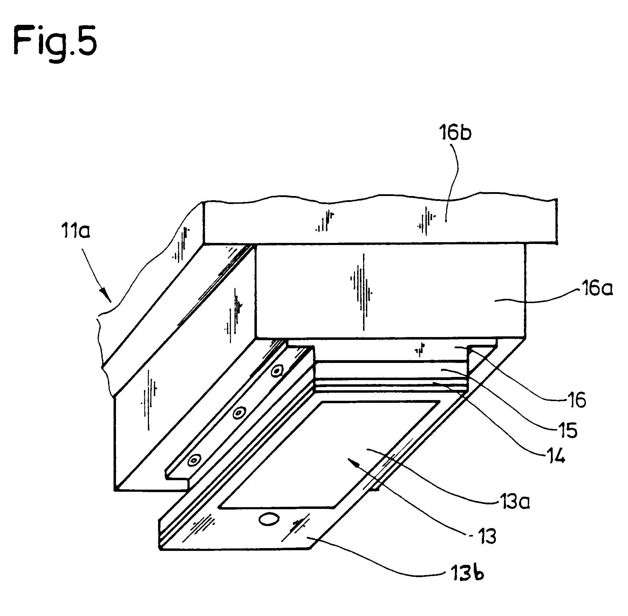

Jedenfalls umfaßt bei dem dargestellten Ausführungsbeispiel der obere Stempel, - siehe auch Fig. 5 - eine unmittelbar der eingelegten zu kaschierenden Laminatschichtung 12 zugewandte, bevorzugt metallische Preßplatte 13, die wiederum bevorzugt aus einem geeigneten sehr harten Material, beispielsweise Hartmessing besteht, welches verzinntvernickelt sein kann. An eine solche Preßplatte 13 mit beispielsweisen Dickenabmessungen von 0,3 mm schließt sich eine auch bei konventionellen Geräten üblicherweise eingesetzte flächenhafte Heizfolie 14 an, deren Dicke beispielsweise nicht größer als 0,1 mm sein kann, wobei es sich hier wie auch für alle anderen Maßangaben versteht, daß diese lediglich einem besseren Verständnis dienen und die Erfindung nicht einschränken.

Schließlich kann hinter der Heizfolie 14 noch eine Druckausgleichsschicht 15 aus beliebig geeignetem Material, bevorzugt Kunststoff und wiederum bevorzugt Polyacrylschicht mit einer Dicke von beispielsweise 0,3 mm angeordnet sein.

An diese Druckausgleichsschicht können sich noch einige weitere Schichten, Platten oder Blöcke anschließen, die beispielsweise auch deshalb sinnvoll sind, um bei bestehenden Kaschiergeräten, die für den Stempelbereich einen vorgegebenen Abstand aufweisen, die erfindungsgemäße Ausführungsform einbauen zu können. Diese Schichten oder Blöcke bilden dann Abstandsausgleichsschichten, jedoch mit der Maßgabe, daß an die Druckausgleichsschicht 15 (für den Kaschiervorgang) zunächst eine weitere, einen thermischen Isolator bildende Wärmedämmschicht 16 angesetzt ist, die sicherstellt, daß von der Flächenheizfolie 14 erzeugte Wärme jedenfalls nicht in dieser Richtung, und insoweit ungenutzt, abfließen kann. Eine Kühlung ist für den Bereich des oberen Preßstempels 11a jedenfalls nicht vorgesehen, und daher grenzt die Wärmedämmschicht 16 über einen weiteren, vorzugsweise ebenfalls thermisch isolierenden Zwischenblock 16a dann an eine üblicherweise vorhandene obere Wippenkonstruktion 16b des Kaschiergeräts an, wodurch sich der Aufbau des oberen Stempels vervollständigt.

Aus der Darstellung der Fig. 5 läßt sich ferner erkennen, daß die unmittelbar den zu kaschierenden Laminatschichten zugewandte Preßplatte 13 konstruktiv so ausgelegt ist, daß die eigentliche Hartmessingplatte 13a von einem Trägerrahmen 13b, bevorzugt Epoxy-Rahmen mit gleicher Dicke, umgeben ist; das gleiche trifft für die Heizfolie 14 zu, die von einem entsprechenden Trägerrahmen (in Fig. 5 nicht erkennbar) gehalten und umgeben ist.

Hier wie auch hinsichtlich des Schichtaufbaus des anderen Stempels können und sind mit Vorzug die einzelnen Schichten durch beidseitig klebende Folien miteinander verbunden, die extrem dünn sein können und beispielsweise eine Dicke von lediglich 0,002 mm aufweisen.

Der untere Preßstempel 11a (siehe Fig. 1-4) ist insofern in seinem Aufbau umfangreicher ausgebildet, als bei diesem, was natürlich lediglich das vorliegende Ausführungsbeispiel betrifft, die relative Beweglichkeit der einzelnen eine Wärme- bzw. eine Kühlwirkung erzeugenden Schichtkomponenten realisiert ist.

Zunächst umfaßt der untere bzw. allgemein der eine Relativbewegung seiner Komponenten ermöglichende Preßstempel 11b ebenfalls eine unmittelbar dem zu kaschierenden Erzeugnis 12 zugewandte Preßplatte 13', die vorzugsweise ebenfalls aus einem geeigneten Metall, beispielsweise verzinntvernickeltem Hartmessing bestehen kann und von einem (Epoxy)Rahmen 13a' umgeben ist.

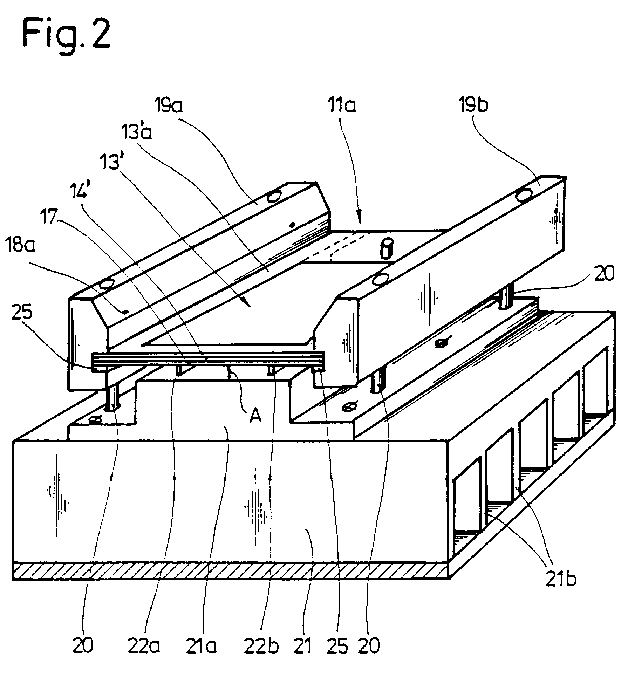

Nach unten, also zur gegenüber den zu kaschierenden Laminatschichten 12 abgewandten Seite der Preßplatte schließt sich bzw. kann sich auch hier eine Flächenheizfolienschicht 14' anschließen, wobei, im wesentlichen aus Stabilitätsgründen noch eine weitere Stützschicht oder Stützplatte 17 vorgesehen ist, die jedenfalls aus einem sehr gut wärmeleitenden Material wie ebenfalls Messing bestehen kann (siehe auch Fig. 2).

Die Preßplatte kann dabei eine Dicke von 0,3 mm, die Flächenheizfolie eine Dicke von 0,1 mm und die Stützplatte 17 eine Dicke von 0,3 - 0,5 mm aufweisen.

Diese Schichtung ist mittels seitlicher Verstiftung, wozu beispielsweise Nylonstifte 18a, 18b vorgesehen sein können, in seitlichen Führungsblöcken 19a, 19b gehalten, die ihrerseits über beispielsweise vier Schrauben 20 lose mit einem unteren, für sich gesehen bei solchen Kaschiergeräten bekannten Kühlblock 21 verbunden sind, der beispielsweise auch Kühlrippen, wie bei 21b angedeutet, zur hier bevorzugt eingesetzten Ventilatorluftkühlung aufweisen kann.

Es ist ein wesentliches Merkmal, daß zwischen der Preßplatte 13' bzw. bei dem dargestellten Ausführungsbeispiel zwischen der zu Stabilitätszwecken vorgesehenen unteren Stützplatte 17 und dem Kühlblock-Wirkungsbereich ein Abstand A im Ausgangs- oder Ruhezustand vorliegt, wobei der Kühlblock-Einwirkungsbereich sich dadurch bis zur Stützplatte 17 erstreckt, weil ein in den durch die seitlichen U-förmigen Führungsblöcke 19a, 19b vorgegebenen Zwischenraum ein Kühlkörper 21a hineinragt, der, für den zunächst angenommenen und zu beschreibenden Fall beispielsweise auch ein einstückiger Ansatz am Kühlblock 21 sein kann oder als separate Kühlkörperplatte mit dem Kühlblock 21 in einer gut wärmeleitenden Verbindung steht, z. B. wie in Fig. 2 gezeigt, bei flächiger Anlage verschraubt ist.

Die Grundfunktion eines solchen Preßstempels besteht dann darin, daß während des Heizteilzyklus der Kühlkörper 21a, dessen Kühlwirkung durch den angrenzenden Kühlblock 21 entscheidend unterstützt wird - auf eine weitere Ausgestaltung hinsichtlich der denkbaren Kühlmöglichkeiten wird weiter unten noch eingegangen -, zur Preßzone einen Abstand einhält, der im sich daran anschließenden Kühlteilzyklus überbrückt wird durch eine in der Zeichenebene nach oben gerichtete Bewegung von Kühlkörper 21a (und vorzugsweise auch Kühlblock 21) bis zur Anlage an die gut wärmeleitende Stützplatte 17 aus Messing. Da zu diesem Zeitpunkt die Heizwirkung der Flächenheizelemente 14, 14' abgeschaltet ist, wird die im Kaschierungsbereich vorhandene Wärmemenge praktisch schlagartig abgeführt, wobei es keinen Unterschied macht, daß, jedenfalls bei dem dargestellten Ausführungsbeispiel, der obere Preßstempel 11a hierzu nichts beiträgt.

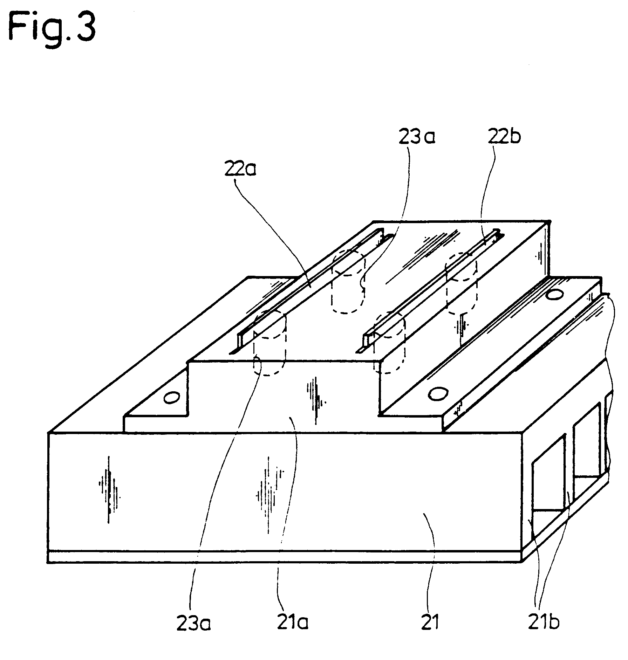

Realisiert wird diese Relativbewegung dadurch, daß der Verbund aus Preßplatte 13', Flächenheizfolie 14' und Stützplatte 17, der eine möglichst geringe Wärmekapazität aufweisen soll und beispielsweise nur eine Dicke von lediglich 1 mm aufweist, nach unten durch (wärmeisolierende) Stützstege 22a, 22b gehalten und unterstützt ist, die ihrerseits gleitverschieblich in entsprechenden Bohrungen 23, ausgestattet gegebenenfalls mit Führungshülsen 23a, des Kühlkörpers 21a geführt und federnd nach oben gedrückt sind. Hierzu können in größeren Ausnehmungen 23' des Kühlkörpers kräftige Unterstützungsfedern 24 gelagert sein, die die Stützstege 22a, 22b nach oben drücken. Nach unten stützt sich der Kühlkörper 21a dabei auf dem Kühlblock 21 ab (s. Fig. 3).

Die Grundfunktion bei diesem Preßstempel 11b läuft daher so ab, daß nach Einlegen der zu kaschierenden Laminatschichten 12 und Schließen der Aufnahmeöffnung zur Erzielung eines ersten Preßdrucks der Kühlblock 21 nach oben verfahren wird, so daß die beiden Preßplatten 13, 13' mit dem erforderlichen Preßdruck aufeinanderzu und auf die Laminatschichten 12 gedrückt werden, woraufhin durch Stromzuführung zu den Flächenheizfolien 14, 14' die Heizphase eingeleitet wird.

Dieses Hochfahren des Kühlblocks 21 wird beim praktischen Ausführungsbeispiel dadurch realisiert, daß der Kühlblock 21 aus der entspannten Position, bei welcher der Abstand A beispielsweise 6 mm betragen kann, auf einen ersten Druckschwellenwert hochgefahren wird, der die Federn 24 so weit zusammenpreßt, daß der Abstand beispielsweise auf die Hälfte, also etwa 3 mm reduziert wird, wodurch einerseits über die Federn 24 ein hinreichender Kaschierungspreßdruck erzeugt wird und andererseits der zur anfänglichen thermischen Isolierung des Preßzonenbereichs erforderliche Abstand A mit A' = ca. 3 mm gewahrt bleibt.

Nach Beendigung des Heizteilzyklus werden die Heizzonen abgeschaltet, und auf den Kühlkörper 21a wird über den Kühlblock 21 ein zweiter(höherer)Schwellendruck ausgeübt, der die Vorspannung der Federn 24 vollständig überwindet, so daß die Stützstege 22a, 22b so weit zurückgedrückt werden, daß die Oberfläche 21a' des Kühlkörpers 21 unmittelbar an der unteren Fläche 17a der Stützplatte zur Anlage kommt. Hierdurch ergibt sich eine außerordentliche wirksame Kühlung, da der Kühlkörper 21a thermisch in unmittelbarer Wirkverbindung mit dem Kühlblock 21 steht, der ja seinerseits eine entsprechend große Kältekapazität aufweist und vorzugsweise selbst noch über einen kühlenden Ventilatorluftstrom gekühlt wird.

Es versteht sich und ist auch sinnvoll, daß die Kühlung des Kühlblocks bzw. des Zugeordneten Kühlkörpers 21a nicht auf die jeweils ablaufenden Heiz- und KühlTeilzyklen bzw. auf den gesamten Kaschiervorgang abgestimmt zu sein braucht; durch eine ständige Kühlung des Kühlblocks 21 mit zugeblasener Umgebungsluft ergibt sich ein einwandfreies Gleichgewicht im thermischen Haushalt des Geräts, da die eigentlichen Heiz- und Kühlphasen auf die Relativbewegung der Preßstempelkomponenten abgestimmt sind.

Dabei wird die Relativbewegung bei dem vorliegenden Kaschiergerät deshalb auf Druckwerte bezogen, weil es ohnehin notwendig ist, auf die zu kaschierenden Schichten einen vorgegebenen Preßdruck auszuüben und durch entsprechende Beachtung der aus den jeweiligen Federkennlinien ergebenden Druckschwellwerten lassen sich die einzelnen Abstände dann problemlos einstellen.

Es ist sinnvoll, den Verbund aus Preßplatte 13', Flächenheizfolie 14' und Messing-Stützplatte 17 gegen die Umgebung thermisch zu isolieren, so daß neben der Stiftfixierung mittels Nylonstiften auch an den unteren Auflageflächen des Messingstützblocks 17 in der U-Ausnehmung der seitlichen Führungsblöcke 19a, 19b noch thermische Isolatoren 25, Vorzugsweise Epoxyschichten oder -streifen angeordnet sind.

Eine weitere bevorzugte Ausgestaltung vorliegender Erfindung besteht darin, daß zur wirkungsvollen Verstärkung der von Kühlblock 21 und Kühlkörper 21' auf den Preßzonenbereich ausgeübten Kältewirkung an beliebiger Stelle, vorzugsweise im Übergangsbereich zwischen Kühlblock 21 und Kühlkörper 21' Peltier-Elemente oder sonstige, eine Kühlung des Kühlkörpers 21a bewirkende Komponenten angeordnet sind. Bei dem dargestellten Ausführungsbeispiel werden Peltier-Elemente 26 verwendet, deren kalte Seiten K auf den Kühlkörper 21a gerichtet sind, während die warme Seite W im Kühlblock 21 beispielsweise eingebettet sein kann zur besseren Wärmeabführung. Auf diese Weise ist es leicht möglich, dem Kühlkörper 21a eine konstante Temperatur zu verleihen, wobei hier auch noch Regelungen eingreifen können, die eine entsprechende Strombeaufschlagung des oder der vorgesehenen Peltier-Elemente 26 nur dann vornehmen, wenn die Temperatur des Kühlkörpers 21a von einer vorgegebenen Zieltemperatur abweicht, die beispielsweise bei 35° liegen kann.

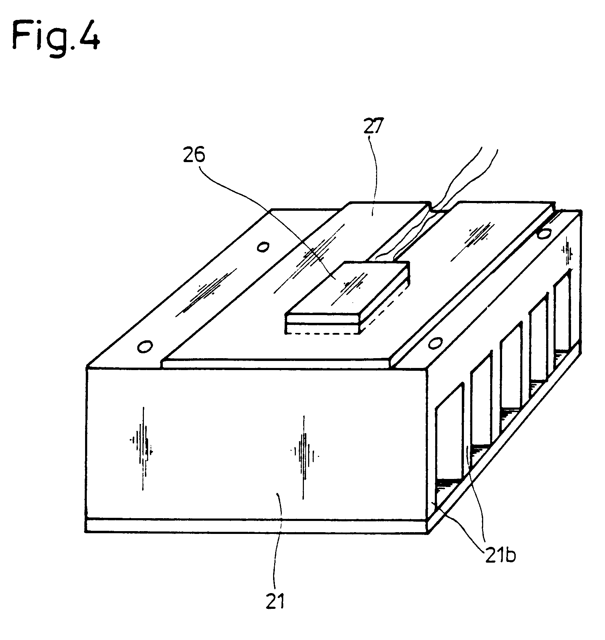

Wenn sich das Peltier-Element 26 nicht über die gesamte Berührungsfläche zwischen Kühlblock 21 und Kühlkörper 21a erstreckt, ist es sinnvoll, zwischen die restlichen Flächen, in der Zeichnung beidseitig oder allseitig zum Peltier-Element 26 noch thermische Isolatoren 27 anzuordnen, die wiederum Epoxyschichten bzw., wie in Fig. 4 gezeigt, ein Epoxyrahmen sein können. Hierdurch wird ein Kurzschluß der Peltier-Elementwirkung vermieden.

Zur Optimierung sowohl der Heizleistung als auch des nachfolgenden Abkühlvorgangs sind daher, wie teilweise schon erwähnt, sowohl die Stützstege 22a, 22b als auch die Zwischenschichten 25 und 27 als thermische Isolatoren ausgebildet - bei den Stützstegen 22a, 22b ist dies deshalb sinnvoll, damit die während des Heizteilzyklus erzeugte Wärme nicht über diese Stege, jedenfalls teilweise abfließt.

Die lose Führung der beidseitigen Führungsblöcke 19a, 19b im Kühlblock 21 mit Hilfe der Verschraubungen 20 ist deshalb notwendig, damit der Kühlblock 21 relativ zu dem mit den Führungsblöcken verstifteten Verbund aus Preßplatte 13 und Stützplatte 17 eine Bewegung durchführen kann.

Eine besonders vorteilhafte Ausgestaltung vorliegender Erfindung besteht schließlich noch darin, den Bewegungsablauf, mit welchem in der Heiz- und in der Abkühlungsphase zunächst der aufgenommene Rohling kaschiert, also für die Druckausübung über die beiden Preßplatten Kräfte aufgebracht werden und anschließend in der Abkühlungsphase noch durch Heranbringen des Kühlblocks die Kühlwirkung aktiviert wird, mindestens teilweise ohne mechanisch einwirkende Kräfte, nämlich bevorzugt pneumatisch, also durch Vakuum- und/oder Druckluftzuführung zu steuern.

Bezieht man sich erneut auf die Darstellung der Fig. 1, dann können in diesem Falle jedenfalls die Stützstege 22a, 22b entfallen zusammen mit ihren Unterstützungsfedern 24 - anstelle dessen wird mindestens der Raum, der von den beidseitigen Preßplatten 13 (oberer Stempel Fig. 5) und 13' (unterer Stempel entsprechend Fig. 1) gebildet wird, bei eingelegtem Rohling und entsprechender Abdichtung unter Vakuumeinfluß gesetzt, was dazu führt, daß die beiden Preßplatten - und die mit diesen einen Verbund bildenden weiteren Schichten, also Heizfolie, Druckausgleichsschichten, Stützplatten u.dgl., die in dem Stempel entsprechend geführt sind, mit hinreichend hohem Druck aufeinandergepreßt werden, eben aufgrund des zwischen diesen beiden Verbundkomponenten eingeführten Vakuums, so daß der Heizteilzyklus mit Verpressung des Rohlings unter entsprechender Temperatureinfluß durchgeführt werden kann.

Hier ergibt sich noch ein zusätzlicher, besonderer Vorteil beim Arbeiten mit pneumatischem Bewegungsablauf, der darin besteht, daß das Vakuum zwischen den beiden Verbundbereichen - von denen dann mindestens einer innerhalb des Stempels verschieblich gelagert sein sollte, damit die erforderliche Aufeinander-Zubewegung unter Vakuumeinfluß auch stattfinden kann - sich natürlich auch auf den eingelegten Rohling auswirkt, was dazu führt, daß dieser ein besonders einwandfreies, hervorragendes Aussehen erhält. Dies ist darauf zurückzuführen, daß beispielsweise sonst bei solchen Kaschierungsvorgängen nicht auszuschließende störende Lufteinschlüsse, Blasen, Aufwölbungen u.dgl. vollständig ausgeschlossen sind, da das Vakuum natürlich gleichzeitig die Wirkung hat, daß jedwede vorhandenen Luftblasen oder -einschlüsse abgesaugt, also entfernt werden. Dies ist besonders vorteilhaft bei Hochglanzkaschierungen.

Der Kaschiervorgang spielt sich daher so ab, daß nach Einlegen des Rohlings zwischen die beiden Preßstempel des Preßwerkzeugs und Schließen der Stempel der Stempelinnenbereich unter Vakuumeinfluß gesetzt wird, so daß, aufgrund des weiter vorhandenen äußeren Luftdrucks, der auf die Außenflächen der Preßplatten-Verbundbereiche einwirkt, der notwendige Preßdruck gleichzeitig mit der entsprechenden Erhitzung für die Kaschierung zur Verfügung gestellt wird.

Nach Beendigung des Heizteilzyklus erfolgt dann, wie weiter vorn schon erläutert, die schnelle Wärmeableitung dadurch, daß an dem jeweiligen Verbund aus Preßplatte, Heizfolie, Stützplatte u.dgl. Kühlflächen herangeführt werden, bevorzugt lediglich im unteren Preßstempel, jedoch, falls gewünscht, auch im oberen Preßstempel, durch einen entsprechenden Bewegungsablauf der Kühlkörperbereiche.

Auch dieser Bewegungsablauf kann pneumatisch, beispielsweise unter Einfluß des ohnehin einwirkenden Vakuums erfolgen, indem man durch geeignete, im Moment des Übergangs vom Heizteilzyklus auf den Kühlteilzyklus angesteuerte Ventile den Vakuumbereich über den jeweiligen Preßplattenverbund nach unten bzw. oben öffnet, so daß auch noch der Kühlkörper angesaugt wird - eine einfache Kontaktanlage sorgt für hinreichenden Wärmeübergang, ohne daß hier noch größere zusätzliche Druckkräfte ausgeübt zu werden brauchen.

Alternativ kann man aber auch von außen auf den mindestens unteren, gegebenenfalls auch beidseitigen Kühlbereich im Preßwerkzeug einen pneumatischen Überdruck (zusätzlich) ausüben, wobei in diesem Fall dann auch ein höherer Druck erzeugt werden kann, verglichen mit dem auf den bei Vakuumeinwirkung maximal erreichbaren äußeren Atmosphärendruck.

Es ist aber auch möglich, im Übergang zum Kühlteilzyklus die Kühlblöcke bzw. Kühlkörperplatten durch Schwenkhebel, durch magnetische Einwirkung, durch Erzeugung von Federkräften oder auch durch Einwirkung solcher kombinierter Kräfte an den jeweiligen Preßplattenverbund heranzuführen.

Abgesehen von den erforderlichen Abdichtmitteln, die sich jedoch bei entsprechend hoher Vakuumerzeugung sicher beherrschen lassen, ergibt sich durch die pneumatische Steuerung der Preßplatten- und Kühlkörperkomponenten auch eine erhebliche Vereinfachung im Aufbau eines solchen Kaschiergeräts, da eine Vielzahl von Druckstegen, Vorspannungsfedern u.dgl. entfallen können.

Eine alternative Gestaltung des mechanischen Aufbaus mit Federvorspannung des Preßverbundes entsprechend Fig. 1 und 2 kann schließlich darin bestehen, daß man auf die Druckstege 22a, 22b verzichtet und die Vorspannungs-Federmittel nach außen, also randseitig anordnet. Vorteilhaft ist hierbei die Heranziehung der Befestigungsmittel 20 (z.B. Schrauben), indem man diese z.B. in den Bohrungen der Führungsblöcke koaxial zu Vorspannungsfedern lagert, so daß der Preßverbund aus 13, 14, 17 hochgedrückt wird. Dies ist auch vorteilhaft, weil mechanisch Druckmittel aus dem empfindlichen Kaschierbereich herausgehalten sind.

## Patentansprüche

1. Verfahren zum Kaschieren von Schichten aus mindestens zum Nil thermoplastischen Folien zur Herstellung von Informationen und/oder Daten tragenden Identifikationskarten, Scheckkarten, Ausweisen, Kreditkarten u.dgl., wobei von einem mindestens auf einer Seite angeordneten, Heiz- und Abkühlmittel umfassenden Preßstempel eines Preßwerkzeugs auf einen eingelegten Rohling eine Druck- und Wärmewirkung ausgeübt wird, wobei
zunächst auf den zwischen den Preßstempeln eingelegten Rohling die zu seiner vollständigen Kaschierung erforderliche Druck- und Wärmeeinwirkung ausgeübt und gleichzeitig während dieser Heizphase eine Wärmeabfuhr dadurch unterbunden wird, wobei Kühlkomponenten in einem vorgegebenen Abstand zu den am Kaschierschritt beteiligten Preß- und Heizkomponenten in dem (den) Preßstempel(n) gehalten werden, worauf anschließend
beim Übergang von der Heizphase zur Kühlphase die Heizwirkung abgeschaltet und gleichzeitig Kühlkörper an die Preß- und Heizkomponenten herangefahren werden, wodurch die Temperatur des in der Heizphase fertig kaschierten Erzeugnisses auf seine Entnahmetemperatur abgesenkt wird.

2. Verfahren nach Anspruch 1, dadurch gekennzeichnet, daß ein Kühlkörper aus einer entspannten Anfangsposition mit vorgegebenem Abstand (A) unter Druckwirkung in eine erste verringerte Abstandsposition (A') zum Preß- und Heizkomponenten-Verbund während der anfänglichen Heizphase verfahren wird und anschließend während der Abkühlphase auf Abstand Null anliegend an den Verbund hochgedrückt wird.

3. Verfahren nach Anspruch 1 oder 2, dadurch gekennzeichnet, daß der während der Heizphase aktivierte Verbund aus einer an die zu kaschierenden Laminatschichten (12) angrenzenden Preßplatte (13'),einer an die Preßplatte angrenzenden Flächenheizfolie (14') und einer zusätzlichen unteren, gut wärmeleitenden Stützplatte (17) durch Federwirkung in einer isolierenden Abstandsbeziehung zu einem unteren Kühlkörper gehalten wird und hierdurch gleichzeitig den erforderlichen Preßdruck für den Kaschiervorgang aufbringt, wobei in der sich daran anschließenden Abkühlungsphase dieser Federdruck zwischen Verbund und Kühlkörper (21a) bis zur thermisch leitenden Anlage vollständig überwunden wird.

4. Verfahren nach Anspruch 3, dadurch gekennzeichnet, daß während der Heizphase der Verbund aus Preßplatte (13'), Flächenheizfolie (14') und Stützplatte (17) gegen seine Umgebung einschließlich Lagerung durch thermische Isolatoren im Abstand gehalten wird und während des sich anschließenden Kühlteilzyklus eine vollflächige Anlage an einen Kühlklörper (21a) durch Relativbewegung erfolgt.

5. Verfahren nach Anspruch 1, dadurch gekennzeichnet, daß in den den Rohling aufnehmenden Raum zwischen den beiden Preßstempeln ein Vakuum eingeleitet wird derart, daß in der Heizphase die (beidseitig) am Kaschierschritt beteiligten Preß- und Heizkomponenten zur Erzielung einer Druck- und Wärmeeinwirkung auf den Rohling gedrückt werden.

6. Verfahren nach Anspruch 5, dadurch gekennzeichnet, daß bei Aufrechterhaltung der Vakuumeinwirkung und gleichzeitiger entsprechender Abdichtung nach außen im Übergang zur Kühlphase die Vakuumwirkung auf den oder die Kühlkörper ausgeweitet wird, so daß diese sich an den jeweiligen zugeordneten Preß- und Heizkomponenten-Verbund thermisch leitend anlegen.

7. Verfahren nach Anspruch 5, dadurch gekennzeichnet, daR beim Übergang zur Kühlphase auf die zunächst zu den beteiligten Preß- und Heizkomponenten im Abstand gehaltenen Kühlblöcke äußere Druckluft zur Einwirkung gebracht und diese dadurch an die Preß- und Heizkomponenten herangefahren werden.

8. Vorrichtung zum Kaschieren von Schichten aus mindestens zum Teil thermoplastischen Folien zur Herstellung von Informationen und/oder Daten tragenden Identifikationskarten, Scheckkarten, Ausweisen, Kreditkarten und dergleichen, wobei von den Preßstempeln eines Preßwerkzeugs, zwischen die der Rohling eingelegt ist, eine Druck- und Wärmewirkung auf diesen ausgeübt wird, wobei auf anfänglichem Abstand zu zugeordneten Kühlkörpern (21, 21a) gehaltenen, einen Verbund bildenden Preß- und Heizkomponenten (13, 14, 15; 13', 14', 17) in der Heizphase ein so starker Druck ausgeübt ist, daß sich bei Beendigung der Heizphase ein fertig kaschierter und endgeformter Rohling ergibt, wobei die Preß- und Heizkomponenten im Übergang zur und in der Kühlphase, in welcher bei abgeschalteter Heizung die zugeordneten Kühlkörper (21, 21a) in thermischem Kontakt an die Preß- und Heizkomponenten herangefahren sind, ihre ursprüngliche Heizphasenposition unverändert beibehalten.

9. Vorrichtung nach Anspruch 8, dadurch gekennzeichnet, daß die Preß- und Heizkomponenten mindestens eines der Preßstempel (11a, 11b) während der Heizphase einen Abstand (A) zu den Kühlblöcken (21, 21a) einhalten, der während der Abkühlungsphase durch unmittelbare Kontaktierung überbrückt wird, wobei Federmittel innerhalb des mindestens einen Preßstempels (11a, 11b) vorgesehen sind, die während des gesamten Kaschiervorgangs (Heizphase - Abkühlphase) den auf das eingelegte Gut zur vollständigen Kaschierung erforderlichen Federdruck aufrecht erhalten.

10. Vorrichtung nach Anspruch 8 oder 9, dadurch gekennzeichnet, daß der Verbund aus Preß- und Heizkomponenten aus einer den zu kaschierenden Laminatschichten (12) zugewandten Preßplatte (13, 13'), einer an dieser angrenzende Flächenheizfolie (14, 14') und gegebenenfalls einer zusätzlichen, thermisch gut leitenden Stützplatte (17) besteht, der innerhalb seitlicher Führungsblöcke (19a, 19b) gehalten und von Federmitteln zur Erzeugung des für die Kaschierung erforderlichen Preßdrucks auf den Gegenstempel und das zwischen beiden angeordnete zu kaschierende Laminat gedrückt ist.

11. Vorrichtung nach einem der Ansprüche 8 bis 10, dadurch gekennzeichnet, daß der Verbund aus Preßplatte (13'), Flächenheizfolie (14') und Stützplatte (17') in seitlichen, U-förmig ausgebildeten Führungsblökken (19a, 19b) durch thermisch isolierende Stifte gelagert ist und über thermisch isolierende Stützstege (22a, 22b) von Druckfedern (24) in Richtung auf die zu kaschierenden Laminatschichten gedrückt ist, wobei die Stützstege (22a, 22b) in der Bewegungsrichtung gleitverschieblich in einem Kühlkörper (21a) geführt sind, der auch die auf die abgewandte Seite der Stützstege wirkenden Druckfedern (24) lagert und daß angrenzend zum Kühlkörper (21a) ein Kühlblock (21) angeordnet ist, der im Verlauf des Kaschiervorgangs in Abhängigkeit zum jeweiligen Teilzyklus (Heizen - Abkühlen) mit unterschiedlichen Preßdrücken beaufschlagt ist derart, daß während der Heizphase ein erster, den erforderlichen Preßdruck über die Druckfedern (24) erzeugender Druck bei gleichzeitiger Überwindung des Anfangsabstands (A) auf einen geringen Abstand (A') ausübbar ist, mit einer nachfolgenden, die Federvorspannung vollständig überwindenden Druckeinwirkung auf den Kühlblock (21), bei welcher sich der mit dem Kühlblock (21) verbundene Kühlkörper (21a) vollflächig thermisch leitend an die Stützplatte (17) des Verbunds anlegt.

12. Vorrichtung nach einem der Ansprüche 8 bis 11, dadurch gekennzeichnet, daß zur Verstärkung der vom Kühlkörper (21a) ausgeübten Kühlwirkung zwischen diesem und dem Kühlblock (21), vorzugsweise im beiderseitigen Übergangsbereich mindestens ein Peltier-Element (26) angeordnet ist, dessen kalte Seite (K) am Kühlkörper (21a) anliegt bzw. in diesen hineinragt und dessen warme Seite (W) in thermischer Leitwirkverbindung mit dem Kühlblock (21) steht, wobei nicht von Peltier-Elementen (26) eingenommene Grenzflächen zwischen Kühlkörper (21a) und Kühlblock (21) durch einen thermischen Kurzschluß der Peltier-Elemente (26) verhindernde thermische Isolatorplatten (27) ausgefüllt sind.

13. Vorrichtung nach einem der Ansprüche 8 bis 12, dadurch gekennzeichnet, daß bei Ausbildung nur eines der Preßstempel (11b) zur Durchführung von relativen Bewegungsabläufen seiner Komponenten der andere Gegenstempel (11a) eine thermische Isolatorschicht (16) bei ansonsten kühlungsfreier Anordnung aufweist derart, daß die von dem Gegenstempel (11a) während der Heizphase erzeugte Wärme auf die zu kaschierenden Laminatschichten (12) gerichtet ist.

14. Vorrichtung nach Anspruch 13, dadurch gekennzeichnet, daß der von einer Relativbewegung freie Gegenstempel (11a) aus einer unmittelbar den zu kaschierenden Laminatschichten (12) zugewandten Preßplatte (13), einer sich daran anschließenden Flächenheizfolie (14) und einer Druckausgleichsschicht (15) besteht, an welche die thermische Isolatorschicht (16) (Epoxyschicht) angrenzt.

15. Vorrichtung nach Anspruch 8, dadurch gekennzeichnet, daß zur Erzeugung des während der Heizphase auf den eingelegten Rohling ausgeübten Preßdrucks mindestens zwischen die beiden aufeinander zugewandten und den Rohling zwischen sich einschließenden Preßplatten (13, 13') ein Vakuum eingeführt wird, bei gleichzeitiger Anordnung von peripheren Dichtmitteln derart, daß zunächst die an dem Kaschiervorgang beteiligten Preß- und Heizkomponenten durch die Einwirkung des äußeren Luftdrucks den Rohling zwischen sich zusammenpressen.

16. Vorrichtung nach Anspruch 1 und 15, dadurch gekennzeichnet, daß das zwischen den Preß- und Heizkomponenten zur Einwirkung gelangende Vakuum im Übergang zur Kühlphase auf angrenzend, jedoch im Abstand gehaltene Kühlblöcke (21, 21a) durch Schaltmittel (Ventile) ausgedehnt wird derart, daß die Kühlblöcke zur thermischen Anlage an den Preß- und Heizkomponentenverbund gelangt.

17. Vorrichtung nach Anspruch 1, 15 oder 16, dadurch gekennzeichnet, daß im Übergang zur Kühlphase die Heranführung der Kühlkörper (21, 21a) an den Verbund aus Preß- und Heizkomponenten durch Einwirkung von Druckluft erfolgt.

## Claims

1. A method for laminating layers of at least partly thermoplastic foils in order to produce identification cards, cheque cards, identity cards, credit cards and the like which carry information and/or data, wherein a pressure and heat effect is exerted on an inserted blank by a press die of a pressing tool which is positioned at least on one side and comprises heating and cooling means, wherein the action of pressure and heat necessary for its full lamination is first exerted on the blank inserted between the press dies, and at the same time the dissipation of heat during this heating phase is prevented, wherein cooling components are held at a predetermined distance from the pressing and heating components in the press die(s) participating in the laminating step, whereupon the heating effect is then switched off in the changeover from the heating phase to the cooling phase and at the same time cooling bodies are moved up to the pressing and heating components, causing the temperature of the product, which has been fully laminated in the heating phase, to be lowered to a temperature at which it can be extracted.

2. A method according to claim 1, characterised in that, during the initial heating phase, a cooling body is moved under the effect of pressure from an untensioned starting position at a predetermined distance (A) into a first reduced distance position (A') relative to the pressing and heating component composite, and is then pushed upwards during the cooling phase to 'zero' distance adjoining the composite.

3. A method according to claim 1 or 2, characterised in that the composite, activated during the heating phase and consisting of a press plate (13') adjoining the laminate layers (12) for lamination, a surface heating foil (14') adjoining the press plate, and an additional, lower supporting plate (17) which conducts heat well, is held by spring action in an insulating spatial relationship to a lower cooling body and thereby applies the necessary pressing pressure for the laminating process at the same time, wherein, in the cooling-down phase that follows, this spring pressure between the composite and the cooling body (21a) is completely overcome until thermally conducting abutment is reached.

4. A method according to claim 3, characterised in that, during the heating phase, the composite consisting of the press plate (13'), the surface heating foil (14') and the supporting plate (17) is held apart from its surroundings including its mounting by means of thermal insulators, and during the cooling part-cycle which follows, full-surface abutment against a cooling body (21a) is effected by means of relative movement.

5. A method according to claim 1, characterised in that a vacuum is introduced into the space between the two press dies which accommodates the blank such that the pressing and heating components participating (on both sides) in the laminating step are pressed during the heating phase onto the blank to achieve a pressure and heat effect thereon.

6. A method according to claim 5, characterised in that, with the vacuum effect maintained and with appropriate sealing off from the exterior at the same time, in the changeover to the cooling phase the vacuum effect is extended to the cooling body or bodies, with the result that the said cooling bodies move into thermally conducting abutment against the particular pressing and heating component composite associated with them.

7. A method according to claim 5, characterised in that, in the changeover to the cooling phase, exterior compressed air is made to act on the cooling blocks which are initially held apart from the participating pressing and heating components, and they are thereby moved up to the pressing and heating components.

8. A device for laminating layers of at least partly thermoplastic foils in order to produce identification cards, cheque cards, identity cards, credit cards and the like which carry information and/or data, wherein a pressure and heat effect is exerted on a blank by the press dies of a pressing tool between which the blank is inserted, wherein in the heating phase a pressure is exerted on the pressing and heating components (13, 14, 15; 13', 14', 17) which are held at an initial distance from associated cooling bodies (21, 21a) and form a composite, the strength of the said pressure being such as to produce a fully laminated and finished blank at the end of the heating phase, wherein, in the changeover to and during the cooling phase, in which, with the heating switched off, the associated cooling bodies (21, 21a) are moved up into thermal contact with the pressing and heating components, the pressing and heating components maintain their original heating phase position unchanged.

9. A device according to claim 8, characterised in that the pressing and heating components at least of one of the press dies (11a, 11b) observe a distance (A) from the cooling blocks (21, 21a) during the heating phase which is bridged during the cooling-down phase by direct contacting, wherein spring means are provided inside the at least one press die (11a, 11b) which maintain the necessary spring pressure on the inserted material during the whole laminating procedure (heating phase - cooling-down phase) to produce the complete lamination thereof.

10. A device according to claim 8 or 9, characterised in that the composite of pressing and heating components consists of a press plate (13, 13') directed towards the laminate layers (12) for lamination, a surface heating foil (14, 14') adjoining the said press plate, and, optionally, an additional supporting plate (17) which conducts heat well, the said composite being held within lateral guide blocks (19a, 19b) and being pushed onto the counter-die and the laminate for lamination located between the two by spring means so as to produce the pressing pressure necessary to effect lamination.

11. A device according to one of claims 8 to 10, characterised in that the composite of the press plate (13'), the surface heating foil (14') and the supporting plate (17') is mounted in lateral, U-shape guide blocks (19a, 19b) by means of thermally insulating pins, and by way of thermally insulating supporting bars (22a, 22b) is pushed by compression springs (24) towards the laminate layers to be laminated, the supporting bars (22a, 22b) being guided so as to be slidably movable in the direction of movement in a cooling body (21a) which also supports the compression springs (24) acting on the averted side of the supporting bars, and in that a cooling block (21) is arranged adjacently to the cooling body (21a), which is acted upon with varying pressing pressures during the laminating procedure in dependence on the respective part cycle (heating - cooling down) in such a way that, during the heating phase, a first pressure which produces the necessary pressing pressure via the compression springs (24) may be exerted, with the initial distance (A) being overcome at the same time to produce a small distance (A'), with subsequent action of pressure on the cooling block (21) which completely overcomes the preloading of the spring, whereupon the cooling body (21a) connected to the cooling block (21) comes into full-surface thermally conducting abutment against the supporting plate (17) of the composite.

12. A device according to one of claims 8 to 11, characterised in that in order to intensify the cooling effect exerted by the cooling body (21a), at least one Peltier element (26) is arranged between the said cooling body and the cooling block (21), preferably in the transition region on both sides, the cold side (K) of the said Peltier element adjoining the cooling body (21a) or projecting into it and the warm side (W) thereof being in thermally conductive connection with the cooling block (21), wherein boundary surfaces between the cooling body (21a) and the cooling block (21) not occupied by Peltier elements (26) are filled up with thermal insulator plates (27) which prevent a thermal short circuit of the Peltier elements (26).

13. A device according to one of claims 8 to 12, characterised in that when only one of the press dies (11b) is constructed for the implementation of relative movement sequences of its components, the other counter-die (11a) has a thermal insulator layer (16) with an otherwise cooling-free arrangement, such that the heat generated during the heating phase by the counter-die (11a) is directed at the laminate layers (12) to be laminated.

14. A device according to claim 13, characterised in that the counter-die (11a) which is without a relative movement consists of a press plate (13), directly facing towards the laminate layers (12) for lamination, a surface heating foil (14) joined thereto, and a pressure-compensating layer (15) which is adjoined by the thermal insulator layer (16) (epoxy layer).

15. A device according to claim 8, characterised in that in order to produce the pressing pressure exerted on the inserted blank during the heating phase, a vacuum is introduced at least between the two press plates (13, 13') directed towards one another and enclosing the blank therebetween, with the arrangement at the same time of peripheral sealing means, such that the pressing and heating components participating in the laminating process initially compress the blank between them as a result of the action of the exterior air pressure.

16. A device according to claim 1 and 15, characterised in that the vacuum acting between the pressing and heating components is extended in the changeover to the cooling phase to cooling blocks (21, 21a), which are adjacent thereto but held at a distance therefrom, by switching means (valves) such that the cooling blocks come into thermal abutment against the pressing and heating component composite.

17. A device according to claim 1, 15 or 16, characterised in that in the changeover to the cooling phase, the cooling bodies (21, 21a) are moved up to the composite of pressing and heating components by the action of compressed air.

## Revendications

1. Procédé pour stratifier des couches de feuilles au moins en partie thermoplastiques pour la fabrication de cartes d'identification, de chèques, de passeports, de cartes de crédit ou cartes analogues contenant des informations et/ou des données,
selon lequel
• un poinçon de pressage, comportant au moins d'un côté des moyens de chauffage et de refroidissement et appartenant à un outil de pressage, exerce un effet de pression et de chaleur sur une ébauche mise en place,
• et tout d'abord sur l'ébauche placée entre les poinçons de presse, on exerce l'effet de pression et de chaleur nécessaire à une stratification complète,
• et pendant cette phase de chauffage, on interdit toute déperdition de chaleur,
• les éléments de refroidissement étant maintenus à une distance prédéterminée des composants de pressage et de chauffage participant à l'opération de stratification dans le ou les poinçons de pression, puis après le passage de la phase de chauffage à la phase de refroidissement, on coupe le chauffage et en même temps on rapproche les éléments de refroidissement des composants de pressage et de chauffage, pour abaisser la température du produit dont la stratification est terminée en phase de chauffage, pour atteindre la température d'extraction.

2. Procédé selon la revendication 1,
caractérisé en ce qu'
un élément de refroidissement est déplacé d'une position initiale de détente à une distance prédéterminée (A) sous l'effet de la pression dans une première position d'écartement (A'), réduite par rapport à la combinaison des éléments de pressage et de chauffage pendant la phase de chauffage initiale, puis de manière consécutive, pendant la phase de refroidissement, cet élément est appliqué contre le composé avec une distance nulle.

3. Procédé selon la revendication 1 ou 2,
caractérisé en ce que
le composé activé pendant la phase de chauffage et comprenant une plaque de pressage (13') adjacente aux couches (12) à stratifier, une feuille de chauffage en surface (14') adjacente à la plaque de pressage et une plaque d'appui (17) supplémentaire, inférieure, bonne conductrice de la chaleur, est maintenu sous l'effet de ressort dans une situation écartée, isolante par rapport à un élément de refroidissement inférieur et applique ainsi simultanément la pression nécessaire au pressage pour l'opération de stratification et, au cours de la phase de refroidissement consécutive, on dépasse complètement cette pression de ressort entre le composé et l'élément de refroidissement (21a) jusqu'à l'appui en conduction thermique.

4. Procédé selon la revendication 3,
caractérisé en ce que
pendant la phase de chauffage, le composé comprenant la plaque de pressage (13'), la feuille de chauffage en surface (14') et la plaque d'appui (17) est maintenu à distance par rapport à son environnement y compris les paliers, par des éléments isolants thermiques et pendant le cycle de refroidissement partiel consécutif, on a un appui en pleine surface contre un élément de refroidissement (21a) par mouvement relatif.

5. Procédé selon la revendication 1,
caractérisé en ce que
dans le volume recevant l'ébauche entre les deux poinçons de presse, on réalise le vide de façon qu'en phase de chauffage les composants de pressage et de chauffage participant (des deux côtés) à l'opération de stratification, soient pressés contre l'ébauche pour réaliser un effet de pression et de chauffage.

6. Procédé selon la revendication 5,
caractérisé en ce qu'
en maintenant le vide et en assurant en même temps une étanchéité vis-à-vis de l'extérieur à la transition entre la phase de refroidissement, on étend l'effet du vide aux éléments de refroidissement de façon que ceux-ci s'appliquent en conduction thermique contre le composé des éléments de pressage et de chauffage respectifs.

7. Procédé selon la revendication 5,
caractérisé en ce qu'
au passage à la phase de refroidissement, on envoie de l'air comprimé extérieur pour agir sur les blocs de refroidissement maintenus tout d'abord à distance des éléments de pressage et de chauffage qui participent, puis on approche ces blocs des éléments de pressage et de chauffage.

8. Dispositif pour stratifier des couches de feuilles au moins en partie thermoplastiques pour fabriquer des cartes d'identification, des cartes de chèques, des passeports, des cartes de crédit ou analogues portant des informations et/ou des données, et pour les poinçons de presse, d'un outil de presse, entre lesquels on place une ébauche, on exerce sur ceux-ci un effet de pression et de chaleur,
dans lequel,
• on maintient initialement à distance les éléments de refroidissement correspondants (21, 21a), en exerçant sur ceux-ci par des éléments de pressage et de chauffage (13, 14, 15 ; 13', 14', 17), formant le composé, en phase de chauffage, une pression suffisamment intense pour qu'à la fin de la phase de chauffage on obtienne une ébauche dont la stratification est terminée et qui correspond à la forme définitive,
• et au passage vers la phase de refroidissement, les composants de pressage et de chauffage, phase pendant laquelle le chauffage est coupé, on met les éléments de refroidissement (21, 21a) associés en contact thermique aux éléments de pressage et de chauffage et on les maintient inchangés dans leur position initiale de la phase de chauffage.

9. Dispositif selon la revendication 8,
caractérisé en ce que
les composants de pressage et de chauffage d'au moins un poinçon de pressage (11a, 11b), pendant la phase de chauffage, conservent une distance (A) par rapport aux blocs de refroidissement (21, 21a), distance qui est shuntée pendant la phase de refroidissement par la mise en contact direct, et des moyens à ressort sont prévus à l'intérieur d'au moins un poinçon de pressage (11a, 11b), moyens qui pendant toute l'opération de stratification (phase de chauffage-phase de refroidissement) maintiennent la pression élastique nécessaire à la stratification complète pour le produit mis en place.

10. Dispositif selon la revendication 8 ou 9,
caractérisé en ce que
le composé formé des composants de pressage et de chauffage se compose d'une plaque de pressage (13, 13') tournée vers les couches (12) à stratifier agglomérées d'une feuille de chauffage de surface (14, 14') adjacente à celle-ci et le cas échéant d'une plaque d'appui (17), complémentaire à bonne conduction thermique, en étant maintenue latéralement dans des blocs de guidage (19a, 19b) et des moyens à ressort générant la pression nécessaire au pressage à la stratification étant exercée sur le contre-poinçon et le produit à stratifier qui se trouve dans l'intervalle.

11. Dispositif selon l'une des revendications 8 à 10,
caractérisé en ce que
le composé formé de la plaque de pressage (13'), de la feuille de chauffage en surface (14') et de la plaque d'appui (17') est logé dans des blocs de guidage (19a, 19b) ayant latéralement une forme de U, en étant maintenu par des broches d'isolation thermique et pressé par des branches de soutien (22a, 22b) à isolation thermique, par des ressorts de compression (24) dans la direction des couches à stratifier agglomérées, les branches d'appui (22a, 22b) étant guidées dans la direction de déplacement, de manière coulissante dans un élément de refroidissement (21a) qui loge les ressorts de compression (24) agissant sur le côté opposé des branches d'appui et en ce que de manière adjacente à l'élément de refroidissement (21a), il est prévu un bloc de refroidissement (21) sollicité au cours de la stratification en fonction du cycle partiel respectif (chauffage-refroidissement) avec des pressions différentes de pressage pour que pendant la phase de chauffage, une première pression soit exercée par les ressorts de compression (24) au niveau nécessaire au pressage avec réduction simultanée de l'écartement initial (A) jusqu'à une distance plus faible (A'), suivie d'un effet de pression qui dépasse complètement la précontrainte de ressort, cet effet étant exercé sur le bloc de refroidissement (21) pour lequel l'élément de refroidissement (21a) relié au bloc de refroidissement (21) s'applique en pleine surface avec conduction thermique contre la plaque d'appui (17) du compose.

12. Dispositif selon l'une des revendications 8 à 11,
caractérisé en ce que
pour amplifier l'effet de refroidissement exercé par l'élément de refroidissement (21a) entre celui-ci et le bloc de refroidissement (21), de préférence dans la zone transitoire des deux côtés, il est prévu au moins un élément à effet Peltier (26) dont le côté froid (K) est appliqué contre le corps de refroidissement (21a) ou pénètre dans celui-ci et dont le côté chaud (W) est en liaison de conduction thermique avec le bloc de refroidissement (21), la surface limite non occupée par les éléments Peltier (26) entre le corps de refroidissement (21a) et le bloc de refroidissement (21) étant remplie par des plaques d'isolation (27) thermiques, évitant tout pont thermique entre les éléments Peltier (26).

13. Dispositif selon l'une des revendications 8 à 12,
caractérisé en ce que
dans la réalisation seulement un poinçon de pressage (11b) pour effectuer des mouvements relatifs de ces composants, l'autre poinçon, antagoniste (11a) comporte une couche d'isolation thermique (16) pour une disposition par ailleurs sans refroidissement de façon que la chaleur générée par le contre-poinçon (11a) pendant la phase de chauffage soit dirigée vers les couches (12) à stratifier agglomérees.

14. Dispositif selon la revendication 13,
caractérisé en ce que
le contre-poinçon (11a) est libre pour un mouvement relatif, à partir d'une plaque de pressage (13) tournée directement vers les couches (12) à stratifier agglomérées, se compose d'une feuille de chauffage en surface, (14) adjacente et d'une couche d'équilibrage de pression (15) à laquelle est adjacente la couche d'isolation thermique (16) (couche époxy).

15. Dispositif selon la revendication 8,
caractérisé en ce que
pour générer la pression exercée pour le pressage pendant la phase de chauffage, sur l'ébauche mise en place, au moins entre les deux plaques de pressage (13, 13') tournées l'une vers l'autre et emprisonnant entre elles l'ébauche, on crée le vide et avec une mise en place simultanée d'éléments d'étanchéité périphérique de façon que tout d'abord les composants de pressage et de chauffage participant à la stratification, compriment entre eux l'ébauche par action de la pression d'air extérieur.

16. Dispositif selon les revendications 1 et 15,
caractérisé en ce que
le vide réalisé entre les composants de pressage et de chauffage, au passage à la phase de refroidissement, s'étend par des moyens de commutation (vannes) sur les blocs de refroidissement (21, 21a), adjacent mais néanmoins maintenu à distance de façon que les blocs de refroidissement arrivent en appui thermique contre le composé formé des composants de pressage et de chauffage.

17. Dispositif selon les revendications 1, 15 ou 16,
caractérisé en ce qu'
au passage à la phase de refroidissement, le rapprochement des corps de refroidissement (21, 21a) contre le composé formé des composants de pressage et de chauffage se fait par action de l'air comprimé.
